# EUROPÄISCHE PATENTANMELDUNG

(11) **EP 1 700 518 A1**
(43) Veröffentlichungstag der Anmeldung: **13.09.2006**
(21) Anmeldenummer: 06004169.6
(22) Anmeldetag: 02.03.2006
(51) Int. Cl.: A01C 19/04

(54) **Sämaschine mit einem Rahmen**

(30) Priorität: 09.03.2005 DE 102005010740
(71) Anmelder: Amazonen-Werke H. Dreyer GmbH & Co. KG, 49205 Hasbergen (DE)
(72) Erfinder: Johannaber, Stefan-Jan, Dipl.-Ing., 49536 Lienen (DE)

(57) **Zusammenfassung**

Sämaschine mit einem Rahmen (1), an dem ein quer zur Fahrtrichtung und horizontal verlaufender Scharbalken (7) um seine Längsachse mittels eines, vorzugsweise motorischen Stellelementes (11) verdrehbar angeordnet ist, wobei die Scharhalter der Säschare an dem Scharbalken (7) angelenkt sind, wobei durch Verdrehen des Scharbalkens (7) mittels des Stellelementes (11) in die eine Richtung die Scharhalter (18) und Säschare (19) in Richtung des Bodens bewegbar und durch Verdrehen in die entgegengesetzte Drehrichtung die Säschare (19) aus dem und/oder vom Boden aus- und/oder anhebbar sind. Um eine einfache Antriebsmöglichkeit für derartige Dosierorgane zu schaffen, ist vorgesehen, dass an dem Rahmen (1,3) zumindest ein an einem Anlenkarm (22) angeordnetes und auf dem Boden abrollendes Rad (23) höhenbeweglich angelenkt ist.

## Beschreibung

Die Erfindung betrifft eine Sämaschine mit einem Rahmen gemäß des Oberbegriffes des Patentanspruches 1.

Derartige Sämaschinen sind in der Praxis bekannt. Den an den Scharbalken angeordneten Säscharen werden über Dosierorgane und Verteilerleitungen in einstellbaren Mengen die auszubringenden Güter, wie Saatgut und Düngemittel zugeführt. Die Dosiervorrichtungen werden mittels eines Antriebsorgans angetrieben.

Der Erfindung liegt die Aufgabe zugrunde, eine einfache Antriebsmöglichkeit für derartige Dosierorgane zu schaffen.

Diese Aufgabe wird erfindungsgemäß durch das kennzeichnende Merkmal des Patentanspruches 1 gelöst. Infolge dieser Maßnahme werden die Dosierorgane durch das mittels eines Anlenkarmes am Rahmen angeordnete und auf dem Boden abrollende Rad angetrieben. Hierdurch wird ein weg- und geschwindigkeitsabhängiger Antrieb der Dosierorgane entsprechend der Fortbewegung der Sämaschine über dem Boden gewährleistet.

Um in einfacher Weise den Anlenkarm mit dem Rad vom Boden abheben zu können, wenn die Maschine in Transportstellung gebracht oder zum Wenden am Feldende angehoben werden muss, ist vorgesehen, dass an dem Rahmen zumindest ein an einem Anlenkarm angeordnetes und auf dem Boden abrollendes Rad höhenbeweglich angelenkt ist.

Eine einfache Anordnung des Anlenkarmes am Rahmen ergibt sich dadurch, dass der Anlenkarm mittels eines Gelenkelementes an dem Rahmen angeordnet ist.

Um in einfacher Weise den Anlenkarm ausheben zu können, ist vorgesehen, dass das Aushubelement unterhalb des Anlenkarmes angeordnet ist.

Eine einfache Anlenkung des Aushubelementes lässt sich dadurch erreichen, dass das Aushubelement mittels eines Gelenkelementes an dem Anlenkarm angeordnet ist.

Eine weitere Anlenkung des Aushubelementes zum Ausheben des Anlenkarmes zum Ausheben des Anlenkarmes mit dem Rad lässt sich dadurch erreichen, dass an dem Rahmen oder dem Anlenkarm ein an dem Anlenkarm zum Ausheben des Anlenkarm zur Anlage kommender Zwischenhebel mittels eines Gelenkes angelenkt ist, und dass an dem Zwischenhebel das am Hebel des Scharbalkens angelenkte Aushebelement am Zwischenhebel angelenkt ist.

Eine andere Anlenkung des Aushubelementes lässt sich dadurch erreichen, dass das am Hebel des Scharbalkens angelenkte Aushubelement an dem Anlenkarm angelenkt ist.

Damit das Rad mit dem Anlenkarm während der Betriebsstellung eine ausreichende freie Beweglichkeit aufweist, ist vorgesehen, dass das Aushebelement zumindest in seinem einen Anlenkungsbereich ein Langloch aufweist.

Weitere Einzelheiten der Erfindung sind der Beispielsbeschreibung und den Zeichnungen zu entnehmen. Hierbei zeigen
- Fig. 1: die Sämaschine ausschnittsweise in Seitenansicht und in Arbeitsstellung,
- Fig. 2: die Sämaschine in ausgehobener Position und in Seitenansicht und
- Fig. 3: die in Transportstellung angehobene Sämaschine in Seitenansicht.

Die Sämaschine weist den Rahmen 1 auf, der im wesentlichen aus dem Querbalken 2 und dem daran angeordneten Seitenträgern 3 besteht. An dem Tragbalken 2 ist in nicht dargestellter Weise ein Dreipunktkupplungsrahmen zum Anbau an den Schlepperkraftheber angeordnet. An jedem Ende des Querbalkens 2 ist ein Seitenträger 3 angeordnet. Der Seitenträger 3 weist eine vordere 4 und eine hintere Lagerung 5 auf. In der hinteren Lagerung 5 ist ein quer zur Fahrtrichtung 6 verlaufender Scharbalken 7 mittels der Lager 8 verdrehbar gelagert. In der vorderen Bohrung 4 ist ebenfalls ein nicht dargstelltes Lager mit einem ebenfalls nicht dargestellten quer zur Fahrtrichtung verlaufenden Balken anzuordnen, an welchem Düngerschare anzuordnen sind. An dem Scharbalken 7 ist an dem einen Ende der Hebel 9 angeordnet. Zwischen dem freien Ende 10 des Hebels 9 und dem Seitenträger 3 des Rahmens 1 ist ein als doppelwirkender Hydraulikzylinder 11 ausgebildetes motorisches Stellelement angeordnet, mittels welchem der Scharbalken 7 in dem Lager 5 verdrehbar ist. Dem Hydraulikzylinder 11 ist die Strebe 12, in welcher ein Langloch 13 angeordnet ist, zugeordnet. Die Strebe 13 ist an ihrem einen Ende 14 auf dem Bolzen 15 angeordnet, mit dem der Hydraulikzylinder 11 mit dem an dem Scharbalken 7 angeordneten Hebel 9 verbunden ist. In das Langloch 13 der Strebe 12 greift der auf der anderen Seite des Stellelementes 11 angeordnete Bolzen 16 der mit dem Seitenträger 3 des Rahmens 1 verbunden ist. Auf der Seite, auf welcher das Langloch 13 in der Strebe 12 angeordnet ist, ist ein als Schraubspindel 17 ausgebildete Anschlag angeordnet, der an dem Hydraulikzylinder 11 zur Anlage kommt. Mittels dieser als einstellbarer Anschlag ausgebildeten Schraubspindel 17 ist der max. Hubweg des Stellelementes 11 einstellbar. Hierüber kann der Verschwenkweg des Scharbalkens 7 und der max. Schardruck begrenzt werden.

Auf dem Scharbalken 7, der als Quadratrohr ausgebildet ist, sind mittels einer nicht dargestellten Gummilagerung die unteren Scharhalter 18 der beabstandet zueinander angeordneten Säschare 19 federnd gelagert. Um eine parallelogrammähnliche Anlenkung der Säschare 19 zu erhalten, sind die Säschare 19 weiterhin mittels einer oberen Lenkerstrebe 20 an dem Rahmen 1 angelenkt. An dem Scharbalken 7 sind mehrere Säschare 19 beabstandet zueinander angeordnet.

Durch Verschwenken des Scharbalkens 7 über das motorische Stellelement 11 können die Säschare 19 mit Federdruck über die Gummilagerung beaufschlagt werden. Die entsprechende federnde Belastung der Säschare 19 in Richtung des Bodens lässt sich mit dem vorgeschriebenen Anschlag 17 einstellen. Somit sind mittels des Hydraulikzylinders 11 die Scharhalter 18 und die Säschare 19 in Richtung des Bodens mit Federkraft beaufschlagt. Andererseits lassen sich durch das Verdrehen des Scharbalkens 7 in Pfeilrichtung 21 durch entsprechende Beaufschlagung des doppeltwirkenden Hydraulikzylinders 11 die Säschare 19 vom Boden aus- oder abheben und gleichzeitig hierdurch einziehen.

An dem Seitenträger 3 des Rahmens 1 ist der Anlenkarm 22 für das auf dem Boden abrollende Antriebsrad 23 für die nicht dargestellten Dosierorgane der Sämaschine angelenkt. Das auf dem Boden abrollende Rad 23 ist an dem unteren hinteren Ende 24 des Anlenkarms 22 mittels eines Lagers drehbar gelagert. Der Anlenkarm 22 ist höhenbeweglich mittels eines Lagers 25 an dem Seitenträger 3 des Rahmens 1 angelenkt. An dem Anlenkarm 22 ist mittels eines Gelenkes 26 ein Zwischenhebel 27 angelenkt, der unterhalb des Anlenkarms 22 angeordnet ist und an diesem zur Anlage kommt. An dem unteren freien Ende 28 des Zwischenhebels 27 ist eine als Aushubelement dienende Strebe 29 angeordnet, die mit ihrem am freien Ende 30 an dem am Scharbalken 7 angeordneten Hebels 9 auf dem Bolzen 15 angeordnet ist. Die Strebe 29 weist in seinen am Zwischenhebel 27 angeordneten Bereich ein Langloch 30 auf. Somit ist also zwischen dem am Scharbalken 7 angeordneten Hebel 9 und dem Anlenkarm 22 ein den Anlenkarm 22 mit dem daran angeordneten Rad 23 aushebendes Aushubelement 29 angeordnet.

Die Funktionsweise ist folgende:

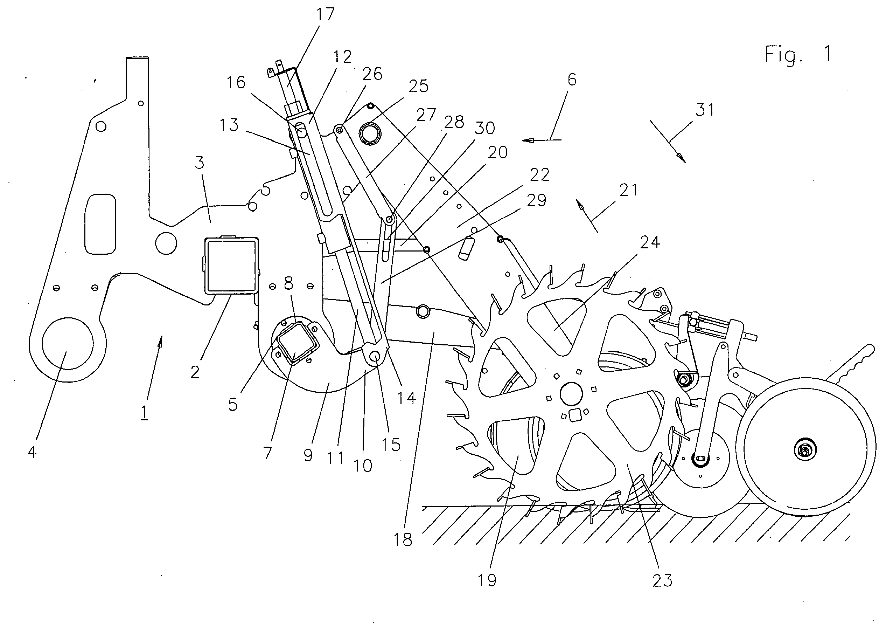

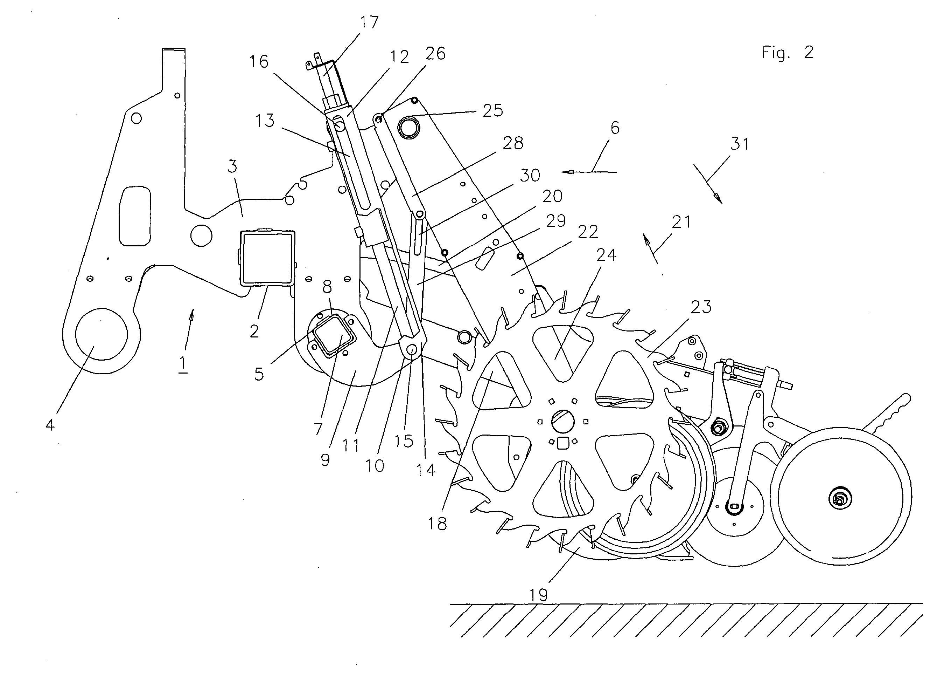

Wenn die Säschare 19 und der Anlenkarm 22 gegenüber dem Rahmen 1 angehoben sind, wie Fig. 1 zeigt, ist der Hydraulikzylinder 11 eingezogen. Hierdurch ist der Scharbaken 7 in Pfeilrichtung 21 verdreht worden, so dass über die nach oben gedrehte Position des Anlenkarms 22 über das Aushubelement 29 und den Zwischenhebel 27 auch der Anlenkarm 22 mit dem Rad 23 angehoben ist. Um die Säschare 19 und den Anlenkarm 22 mit dem Rad 23 in Arbeitsposition zu bringen, wird der Hydraulikzylinder 11 ausgefahren, so dass der Scharbalken 7 über den Hebel 9 in Pfeilrichtung 31 in die in Fig. 2 dargestellte Arbeitsposition gebracht wird. Hierdurch werden einerseits die Säschare 19 federnd gegen den Boden gedrückt und andererseits wird der Anlenkarm 22 mit dem Rad 23 abgesenkt, so dass das Rad 23 Bodenkontakt hat und auf dem Boden läuft und somit in der Lage ist, die Dosierorgane anzutreiben. Aufgrund des sich in dem Zwischenhebel 27 befindlichen Langloches 30 kann das Rad 23 mit dem Anlenkarm 22 weiter in Pfeilrichtung 31 schwenken und es der Bodenkontur sicher folgen kann.

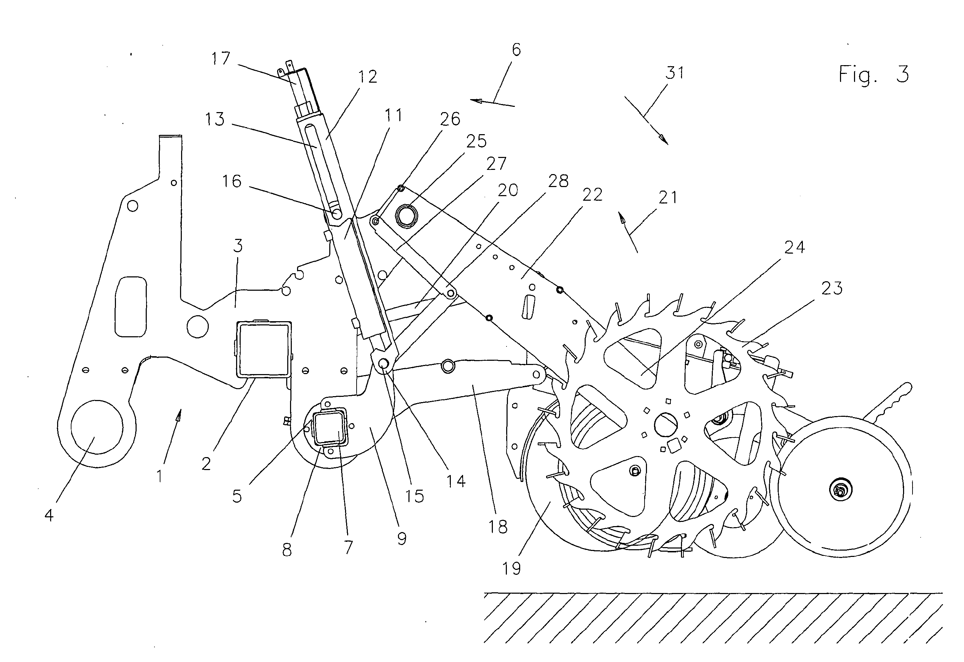

Wenn der Rahmen 1 angehoben wird, ohne dass über den Hydraulikzylinder 11 der Scharbalken 7 verschwenkt wird, fallen der Anlenkarm 21 und die Säschare 19 in die in Fig. 3 dargestellte Position nach unten.

## Patentansprüche

1. Sämaschine mit einem Rahmen, an dem ein quer zur Fahrtrichtung und horizontal verlaufender Scharbalken um seine Längsachse mittels eines, vorzugsweise motorischen Stellelementes verdrehbar angeordnet ist, wobei die Scharhalter der Säschare an dem Scharbalken angelenkt sind, wobei durch Verdrehen des Scharbalkens mittels des Stellelementes in die eine Richtung die Scharhalter und Säschare in Richtung des Bodens bewegbar und durch Verdrehen in die entgegengesetzte Drehrichtung die Säschare aus dem und/oder vom Boden aus- und/oder anhebbar sind, **dadurch gekennzeichnet, dass** an dem Rahmen (1, 3) zumindest ein an einem Anlenkarm (22) angeordnetes und auf dem Boden abrollendes Rad (23) höhenbeweglich angelenkt ist.

2. Sämaschine nach Anspruch 1, **dadurch gekennzeichnet, dass** zwischen einem an dem Scharbalken (7) angeordneten Hebel und dem Anlenkarm (22) ein den Anlenkarm (22) mit Rad (23) aushebendes Aushubelement (27, 29) angeordnet ist.

3. Sämaschine nach Anspruch 2, **dadurch gekennzeichnet, dass** der Anlenkarm (22) mittels eines Gelenkelementes (25) an dem Rahmen (1, 3) angeordnet ist.

4. Sämaschine nach Anspruch 2, **dadurch gekennzeichnet, dass** das Aushubelement (27, 29) unterhalb des Anlenkarmes (22) angeordnet ist.

5. Sämaschine nach Anspruch 2, **dadurch gekennzeichnet, dass** das Aushubelement (27, 29) mittels eines Gelenkelementes (26) an dem Anlenkarm (22) angeordnet ist.

6. Sämaschine nach Anspruch 2, **dadurch gekennzeichnet, dass** an dem Rahmen (1, 3) oder dem Anlenkarm (22) ein an dem Anlenkarm (22) zum Ausheben des Anlenkarms (22) zur Anlage kommender Zwischenhebel (27) mittels eines Gelenkes (26) angelenkt ist und dass an dem Zwischenhebel (27) das am Hebel (9) des Scharbalkens (7) angelenkte Aushebelement (29) am Zwischenhebel (27) angelenkt ist.

7. Sämaschine nach Anspruch 2, **dadurch gekennzeichnet, dass** das am Hebel (9) des Scharbalkens (7) angelenkte Aushubelement (27, 29) an dem Anlenkarm angelenkt ist.

8. Sämaschine nach Anspruch 7, **dadurch gekennzeichnet, dass** das Aushebelement (27, 29) zumindest in seinem einen Anlenkungsbereichs ein Langloch (30) aufweist.
